# EUROPEAN PATENT APPLICATION

(11) **EP 1 394 802 A2**
(43) Date of publication of application: **03.03.2004**
(21) Application number: 03019772.7
(22) Date of filing: 29.08.2003
(51) Int. Cl.: G11B 27/32

(54) **Data selector, data playback unit and method to select data**

(30) Priority: 29.08.2002 JP 2002251861
(71) Applicant: Pioneer Corporation, Tokyo-to (JP)
(72) Inventor: Yabe, Kazuo, Pioneer Corporation, Kawagoe-shi Saitama-ken (JP)
(74) Representative: Grünecker, Kinkeldey, Stockmair & Schwanhäusser Anwaltssozietät

(57) **Abstract**

Serial numbers are assigned to individual music file contained in music file group with layered structure. Based on the serial number, folder and file numbers of one music file is determined when it is input externally (S32), and one music file is selected on the basis of the folder and file numbers (S33).

## Description

This invention is related to the data selector, the data playback unit and the method to select data in order to select data unit from data group with layered structure, which are used when for example running information processing on data with layered structure.

In order to select one data unit from data group with layered structure, it is at least necessary to specify the group to which the one data unit belongs and further specify the one data unit in the group.

For example, when recording music files in such a format as MP3 (MPEG Audio Layer 3; MPEG is the abbreviation for Moving Pictures Experts Group.) or Windows Media Audio (Windows Media is a trademark of Microsoft Corporation.) to such a recording medium as CR-R (Compact Disc-Recordable), CD-RW (Compact Disc-ReWritable), DVD-R (DVD-Recordable) or DVD-RW (DVD-ReWritable), music files are recorded and managed by use of layered structure. In this case, in order that a player can select and playback one music file recorded on for example CD-R, it is necessary for player to have a function to specify the group (folder or directory) to which the one music file belongs and further specify the one music file in the group.

Therefore, a player designed taking into account to playback MP3 or Windows Media Audio files is ordinarily equipped with two types of operation means such as a selection button to select a group and the same to select a music file.

The mainstream music recording format has been CD-DA (Compact Dist-Digital Audio). Today, MP3 or Windows Media Audio is spreading, although the mainstream still seems to be CD-DA. Hereinafter, a recording medium on which music and the like has been recorded is simply referred to as "CD."

Today, CD and CD player have been widespread and there exist various forms of CD players such as one for car audio system or portable CD player, being used among people.

Some types of car audio systems are equipped with main unit to control intensively each component constituting the system. The main unit has buttons or the likes to operate each component for example tuner or CD player. If it is possible to connect a player for MP3 or Window Media Audio to an existing car audio system and operate the player through the existing main unit, playback of MP3 or Windows Media Audio will be realized utilizing the existing main unit, resulting in reduction of the cost or period for product development for manufacturers, on the one hand, and, on the other, elimination of necessity to replace prior system for the users, which are beneficial for both of them.

The existing main unit, however, is designed assuming to operate CD player. CD has no layered structure, music data being simply recorded in a row in a logically single area. To select music data recorded on a CD, there is only needed one type of operation means to select music data (for example, a set of buttons consisting of up and down buttons). Many of the existing main units are equipped with only one type of selection button; therefore the existing main units cannot select one music file of MP3 or Windows Media Audio format which has layered structure.

As above, players for MP3 or Windows Media Audio cannot be operated by the existing main unit and the novel main unit is needed which supports such players. It will cause problems of increasing product development cost and period and inability to improve users' convenience.

On the other hand, portable CD player is equipped with a remote controller to select music data recorded on CD and start and/or stop playback. If the remote controller for portable CD player is utilizable also to the player for MP3 or Window Media Audio, it will result in reduction of development cost and period and improvement of users' convenience.

However, as the remote controller for CD player is equipped only with one type of operation means to select music data recorded on the CD in a row, it cannot be used for the player for MP3 or Windows Media Audio having layered structure. As a result, reduction of development cost and period and/or improvement of users' convenience will be impossible.

This invention was made in view of problems listed above. The object of this invention is to provide the data selector, data playback unit and method of data selection which enables to select one data unit from data group with layered structure by employing operation means to select multiple data units aligned in a row or arranged one-dimensionally.

The above object of the present invention can be achieved by a data selector for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group, the data selector comprising: a generation device, based on said first and second indication information, which generates multiple third indication information corresponding to each of the multiple data units contained in the data group and different from each other; a receiving device which receives one piece of the third indication information input externally; and a selection device which selects one data unit corresponding to the one piece of the third indication information received by the receiving device.

The above object of the present invention can be also achieved by a data selector for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group, the data selector comprising: a receiving device which receives multiple third indication information corresponding to each of the multiple data units contained in the data group and different from each other when it is input externally; a determination device which determines the first and second indication information indicating one data unit corresponding to one piece of the third indication information based on the one piece of the third indication information received by the receiving device; and a selection device which selects the one data unit based on the first and second indication information determined by the determination device.

The above object of the present invention can be also achieved by a computer program embodied on a recording medium which can be read by a computer in a data selector for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group, wherein the computer program causes the computer to function as: a generation device, based on said first and second indication information, which generates multiple third indication information corresponding to each of the multiple data units contained in the data group and different from each other; a receiving device which receives one piece of the third indication information input externally; and a selection device which selects one data unit corresponding to the one piece of the third indication information received by the receiving device.

The above object of the present invention can be also achieved by a data selection method for selecting one data unit from data group which contains multiple data units, the data units being managed by use of layered structure consisting of multiple groups, and in which one data unit is specified by use of the first indication information indicating at least individual group and the second indication information indicating individual data unit contained in each group, the method comprising: a generation process for generating, based on said first and second indication information, multiple third indication information corresponding to each of the multiple data units and different from each other; a receiving process for receiving one piece of the third indication information input externally; and a selection process for selecting one data unit corresponding to the one piece of the third indication information received at the receiving process.

The above object of the present invention can be also achieved by a data selection method for selecting one data unit from data group which contains multiple data units, the data units being managed by use of layered structure consisting of multiple groups, and in which one data unit is specified by use of the first indication information indicating at least individual group and the second indication information indicating individual data unit contained in each group, the method comprising: a receiving process for receiving multiple third indication information corresponding to each of the multiple data units contained in the data group and different from each other when it is input externally; a determination process for determining, based on the one piece of the third indication information received at the receiving process, the first and second indication information indicating one data unit corresponding to the one piece of the third indication information; and a selection process for selecting the one data unit based on the first and second indication information determined at the determination process.

The above object of the present invention can be also achieved by a data playback unit for selecting and playing one data unit from data group which contains multiple data units, the data units being managed by use of layered structure consisting of multiple groups, and in which one data unit is specified by use of the first indication information indicating at least individual group and the second indication information indicating individual data unit contained in each group, the data playback unit comprising: a generation device which generates, based on the first and second indication information, multiple third indication information corresponding to each of the multiple data units and different from each other; a receiving device which receives one piece of the third indication information input externally; a selection device which selects one data unit corresponding to the one piece of the third indication information received by the receiving device; and a playback device which plays one data unit selected by the selection device.

The above object of the present invention can be also achieved by a data playback unit for selecting and playing one data unit from data group which contains multiple data units, the multiple data units being managed by use of layered structure consisting of multiple groups, and in which one data unit is specified by use of the first indication information indicating at least individual group and the second indication information indicating individual data unit contained in each group, the data playback unit comprising: a receiving device which receives multiple third indication information corresponding to each of the multiple data units contained in the data group and different from each other when it is input externally; a determination device which determines, based on one piece of the third indication information received by the receiving device, the first and second indication information indicating one data unit corresponding to the one piece of the third indication information; a selection device which selects the one data unit based on the first and second indication information determined by the determination device; and a playback device which plays one data unit selected by the selection device.
FIG. 1 is a block diagram showing structure of the data selector according to the first preferred embodiment of this invention;
FIG. 2 is a schematic diagram showing layered structure of data group;
FIG. 3 is a schematic diagram showing data structure table;
FIG. 4 is a block diagram showing structure of the data selector according to the second preferred embodiment of this invention;
FIG. 5 is a block diagram showing structure of a car audio system in the example of the invention;
FIG. 6 is a front view showing front panel of the main unit according to the present example;
FIG. 7 is a block diagram showing structure of the MP3 player according to the present example;
FIG. 8 is a schematic diagram showing layered structure of music file grou;
FIG. 9 is a flow chart showing playback preparation processing;
FIG. 10 is a schematic diagram showing data structure table;
FIG. 11 is a flow chart showing serial number generation processing;
FIG. 12 is a flow chart showing playback processing;
FIG. 13 is a flow chart showing folder/file number determination processing;
FIG. 14 is a schematic diagram showing conversion table.

Hereinafter, the preferred embodiments of this invention are described based on the drawings.

### First Preferred Embodiment

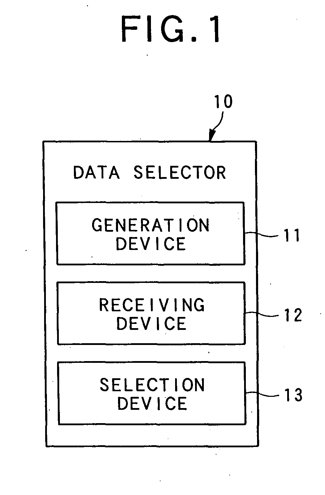

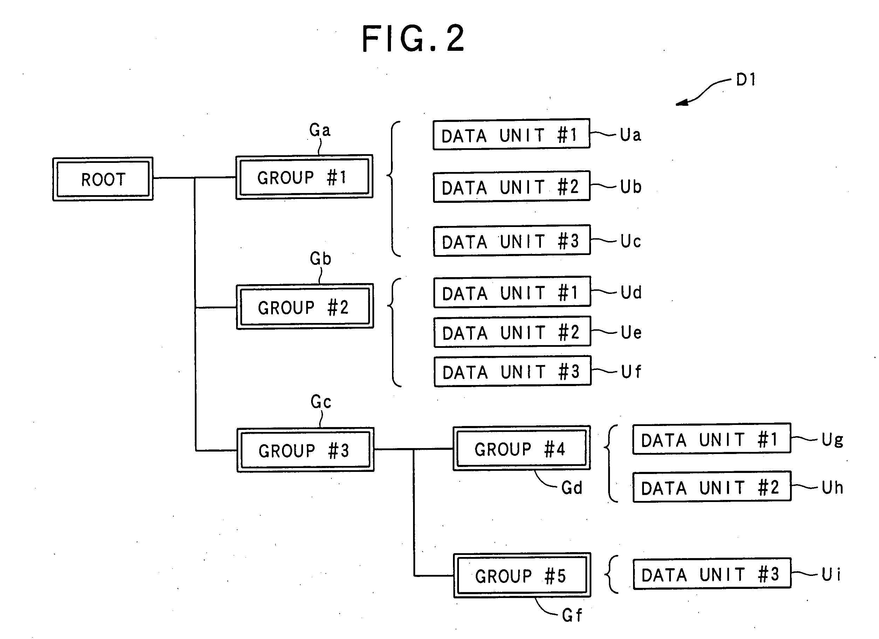

The first embodiment of this invention is now described referring to FIG. 1 and FIG. 2.

First, the structure of the data selector according to the first preferred embodiment is described. Figure 1 shows the structure of the data selector according to the first embodiment. The data selector 10 according to the first embodiment is a device to select one data unit from data group with layered structure.

Data group contains multiple data units. These multiple data units are managed by use of a layered structure consisting of multiple groups. One data unit will be specified by the first indication information at least indicating an individual group and the second indication information indicating the individual data contained within each group.

FIG. 2 shows an example of such data group. As shown in FIG. 2, data group D1 contains multiple data units Ua to Ui. Of these multiple data units, data units Ua to Uc belong to group Ga, data units Ud to Uf belong to group Gb, data units Ug and Uh belong to group Gd, and data unit Ui belongs to group Ge.

Groups Ga to Ge are numbered #1 through #5, respectively. Furthermore, data units Ua to Uc belonging to group Ga are numbered data unit numbers #1 to #3, respectively. Data units Ud to Uf belonging to group Gb are numbered data unit number #1 to #3, respectively. Similarly, to data units Ug and Uh belonging to group Gd are numbered data unit number #1 and #2, respectively, and data unit Ui belonging to group Gf is numbered data unit number #1.

In data group D1 with such a structure, one data unit can be specified by specifying a group number and the data unit number within the group indicated by the group number. Thus, in the example indicated in FIG. 2, the group number represents the first indication information and the data unit number the second indication information.

The first indication number may be any information, not limited to group number, by which an individual group in a data group can be specified such as a name for a group. Also, the second indication number may be any information, by which an individual data unit in each group can be specified such as a name assigned to a data unit, not limited to group number.

As shown in FIG. 1, the data selector 10 which selects one data unit from data group with layered structure such as data group D1 is provided with: a generation device 11 which generates multiple third indication information based on the first and second indication information, multiple third indication information corresponding to the respective multiple data units contained in data group and being different from each other; a receiving device 12 which receives one third indication information input externally; and a selection device 13 which selects one data unit corresponding to one third indication information received by the receiving device 12.

The generation device 11 generates the third indication information based on the first and second indication information. The third indication information is one which corresponds to each of multiple data units contained in data group and differs from each other. For example, for data group D1 shown in FIG. 2, structure may be such that to each of multiple data units Ua to Ui contained in data group are assigned numbers different from each other. In this case, these each number is the third indication information. Also, structure may be such that each of data units Ua to Ui are assigned names different from each other. In this case, these names are the third indication information. As above, the third indication information may be anything as long as they are information corresponding to each of multiple data units contained in data group and different from each other.

The receiving device 12 receives the third indication information when it is input externally. For example, if the third indication information is a signal input externally, the receiving device 12 will be composed of a reception circuit, a connection interface and the like, although it may be anything as long as it is a device to receive the third indication information input externally.

The selection device 13 selects the data unit corresponding to the third indication information received by the receiving device 12. As described above, the third indication information is the one corresponding to each of multiple data units contained in data group and different from each other. Therefore, it is possible to specify one data unit contained in data group and select the one data unit using only the third indication information even if the data group has layered structure. The selection device 13 can be composed of, but not limited to, an operational circuit running information processing against data group.

As mentioned above, the data selector 10 according to the first embodiment has an structure to generate, based on the first and second indication information to specify one data unit from data group with layered structure, multiple third indication information corresponding to each of multiple data units contained in the data group and different from each other, and to select one data unit among the data group based thereon. Therefore, it is possible to select one data unit only with one indication information even if the data group has layered structure.

Therefore, when mounting the data selector 10 according to the first embodiment into for example an information processing unit, it will be possible to select one data unit from data group with layered structure by the existing controller (selection indication input device) of the information processing unit, even if the controller has only a function to select data units aligned in a row or arranged one-dimensionally. Thus, the existing controller can be used without any modification in the information processing unit, even when necessity to deal with data with layered structure has occurred. Consequently, manufacturers will be able to reduce product development cost and period, whereas users will not need to replace newer controller or information processing unit, which will be economically efficient and convenient for them.

### Various aspects of the First Preferred Embodiment

Description for various aspects of the data selector 10 according to the first preferred embodiment is provided below.

First, the generation device 11 may be of such a structure that assigns numbers different from each other to each of multiple data units contained in the data group. In this case, numbers assigned to each of multiple data units contained in data group and different from each other represent the third indication information.

As described above, the third indication information may be anything as long as it is information corresponding to each of multiple data units contained in the data group and different from each other. However, if the third indication information is numbers different from each other which are assigned to each of multiple data units, it is possible to select one data unit from data group easily and rapidly based on the numbers.

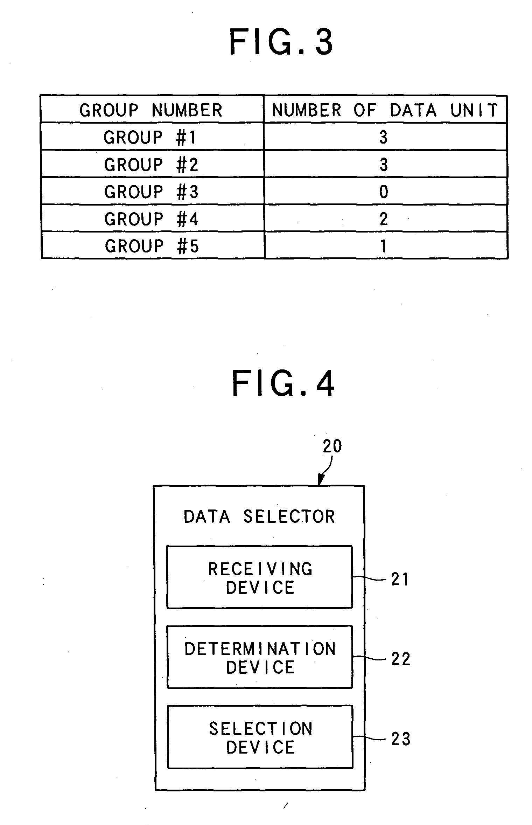

The generation device 11 may be of such a structure that generates data structure table in which the number of data units arranged directly within each group is described for every group and then generates the third indication information using this data structure table. For example, for data group D1 shown in FIG. 2, the number of data units belonging to group #1 is three, the number of data units belonging to group #2 is also three, the number of data units belonging to group #3 is zero, the number of data units belonging to group #4 is two, and the number of data units belonging to group #5 is one. In this case, the generation device 11 generates, for example, a data structure table shown in FIG. 3.

By using such a data structure table, the third indication information can be generated easily and rapidly. For example, assume a case wherein serial numbers are assigned as the third indication information to each data unit Ua to Ui shown in FIG. 2 using the data structure table shown in FIG. 3: Numbers "1" through "11" will be assigned to data units Ua to Ui sequentially, for example, to data unit Ua, "1" will be assigned, to data unit Ub, "2" will be assigned, to data unit Uc, "3" will be assigned, to data unit Ud, "4" will be assigned. In this case, it is possible to assign number "4" to data unit Uc, for example, by adding "1", which is data unit number of data unit Uc in group #2, to "3", which is the number of data units belonging to group #1. Similarly, it is possible to assign number "8" to data unit Uh, by adding "3", which is the number of data units belonging to group #1, to "3", which is the number of data units belonging to group "2, and to "2", which is the number of data unit Uh belonging to group #4.

Then, data selector 10 according to the first embodiment may be of such a structure that is additionally equipped with the selection indication input device. In this case, the selection indication input device is provided with an operation device to perform input operation, and an output device to output the third indication information corresponding to one data unit to a receiving device when input operation is performed to select the one data unit among multiple data unit using the operation device.

This enables to input indication to select one data unit from data group with layered structure.

### Second Preferred Embodiment

The second preferred embodiment of the invention is described referring to FIG. 2 to 4.

FIG. 4 shows the structure of data selector according to the second embodiment of the invention. As shown in FIG. 4, a data selector 20 according to the second embodiment contains multiple data units, similar to the data selector 10 according to the first embodiment, which multiple data units being managed by use of layered structure consisting of multiple groups, and, by the first indication information indicating at least individual group and the second indication information indicating individual data unit contained in each group, selects one data unit from data group (for example, data group D1 shown in FIG. 2) in which the one data unit can be specified.

The data selector 20 is provided with a receiving device 21 which receives multiple third indication information, when input externally, corresponding to each of multiple data units contained in data group and different from each other; a determination device 22 to determine the first and second indication information indicating one data unit corresponding to one third indication information based on the one third indication information received by the receiving device 21, and a selection device 23 to select one data unit based on the first and second indication information determined by the determination device 22.

The receiving device 21 receives the third indication information input externally. For example, if the third indication information is a signal input externally, the receiving device 21 may be composed of a reception circuit, connection interface and the like, although it may be any device which receives the third indication information input externally. Also, the third indication information may be any information as long as it corresponds to each of multiple data units contained in data group and differs from each other.

The determination device 22 determines the first and second indication information indicating one data unit corresponding to the third indication information based on said third indication information received by the receiving device 21. There may exist various methods to derive combinations of the first and second indication information. The relationship between the third indication information and the first and second indication information may be prestored. In this case, the determination device 22 is provided with a storage device such as memory to store the relationship between them. Alternatively, a given operation may be run to calculate the combination of the first and second indication information at every time when receiving the third indication information. In this case the termination device 22 is provided with operational circuit.

The selection device 23 selects one data units among data group based on the first and second indication information determined by the determination device 22.

Thus, as the data selector 20 according to the second embodiment has an structure which derives the combination of the first and second indication information based on multiple third indication information corresponding to each of multiple data units contained in data group and different from each other, and then selects one data unit based thereon, one data unit can be selected with only one indication information even if data group has layered structure.

Therefore, once data selector 20 has been mounted, even an information playback unit having a controller provided with only a function to select data units aligned in a row or arranged one-dimensionally will become able to select one data unit from data group with layered structure. It will eliminate a necessity to replace existing controller with newer one or renew the whole information playback system and result in reduction of product development cost and period for the manufacturers and improvement in economical efficiency and convenience for users.

### Various Aspects of Second Preferred Embodiment

Description for various aspects of the data selector 20 according to the second preferred embodiment is provided below.

As described above, the third indication information may be anything as long as it is information corresponding to each of multiple data units contained in data group and different from each other. However, if the third indication information is numbers different from each other assigned to each of multiple data units, it is enabled to select one data unit from data group easily and rapidly.

The determination device 22 may be of such a structure that generates data structure table in which the number of data units arranged directly within each group is described for every group and then, using this data structure table, determines the first and second indication information indicating one data unit corresponding to one third indication information. For example, for data group D1 shown in FIG. 2, the determination device 22 generates a data structure table shown in FIG. 3.

By using such a data structure table, based on the third indication information, the combination of the first and second indication information corresponding thereto can be determined easily and rapidly. For example, in data group D1 shown in FIG. 2, assume a case wherein serial numbers "1" to "9" are assigned to data units Ua to Ui which are the third indication information. In this case, in order to derive a combination of the first and second indication information corresponding to the third indication information from "5", which is the third indication information of data unit Ue, by using data structure table shown in FIG. 3, "3", which is the number of data units belonging to group #1, is subtracted from "5", which is the third indication information of data unit Ue. From this subtraction, "2", which is the number of group #2, subsequent to group #1, and "2", which is the value derived as a result of subtraction, are the first and second indication information indicating data unit Ue, respectively.

Then, the data selector 20 according to the second embodiment may be of such a structure that is additionally equipped with a selection indication input device. In this case, the selection indication input device is provided with an operation device to perform input operation, and an output device to output the third indication information corresponding to one data unit to a receiving device when input operation is performed to select the one data unit among multiple data units using the operation device.

This enables to input indication to select one data unit from data group with layered structure.

### Third Preferred Embodiment

A data playback unit according to the third embodiment of the invention is now described. The data playback unit according to the third embodiment of the invention is a unit to select and play one data unit from data group containing multiple data units, which are managed by layered structure consisting of multiple groups. In the data group, one data unit is specified by the first indication information indicating at least individual data unit and the second indication information indicating individual data unit contained in each group.

The data playback unit according to the third embodiment is provided with: a generation devices to generate, based on the first and second indication information, multiple third indication information corresponding to each of multiple data units contained in data group and different from each other; a receiving device to receive the one third indication information input externally; a selection device to select one data unit corresponding to the one third indication information received by the receiving device, and a playback device to play one data unit selected by the selection device.

In data playback unit according to the third embodiment, structures of: data group subjected to selection; the generation device; the receiving device; and the selection device, is similar to that of the data selector 10 according to the first embodiment. The data playback unit according to the third embodiment is provided with a playback device in addition to this structure.

The playback device is the one to play one data unit selected. For example, if one data unit is a data encoded and recorded on a recording medium, the playback device is provided with: a reading device to read the data from the recording medium (for example, optical pick up, magnetic head, etc.); a device to decode data read by the reading devices; and the like. On the other hand, if the one data unit is a data sent via internet or the like, the playback device is provided with: a receiving device such as communication interface; a decoding device; and the like. Thus, the playback device may be any device as long as it can play the data group or data units corresponding to the forms of data groups or data units.

As mentioned above, as the data playback unit according to the third embodiment has an structure which generates, based on the first and second indication information to specify one data unit from data group with layered structure, multiple third indication information corresponding to each of multiple data units contained in the data group and different from each other, selects one data unit among the data group based thereon, and plays it, it can select and play one data unit with only one indication information even if data group has layered structure.

Therefore, even with the controller (a selection indication input device) of the data playback unit according to the third embodiment has function to select data unit aligned in a row of arranged one-dimensionally only, it will be possible to select and play one data unit from data group with layered structure by the controller. There will be realized therefore a data playback unit which allows extremely easy operation to select and play data with layered structure.

### Fourth Preferred Embodiment

A data playback unit according to the fourth embodiment of the invention is now described. The data playback unit according to the fourth embodiment of the invention is a unit to select and play one data unit from data group which contains multiple data units, which are managed by layered structure consisting of multiple groups. In the multiple data units, one data unit is specified by the first indication information indicating at least individual data unit and the second indication information indicating individual data unit contained in each group.

The data playback unit according to the fourth embodiment is provided with: a receiving device to receive multiple third indication information corresponding to each of multiple data units contained in data group and different from each other when input externally; a determination device to determine the first and second indication information indicating one data unit corresponding to one third indication information based on the one third indication information received by the receiving device; a selection device to select one data unit based on the first and second indication information determined by the determination device; and a playback device to play one data unit selected by the selection device.

In the data playback unit according to the fourth embodiment, structures of: data group subjected to selection; the receiving device; the determination device; and the selection device, are similar to those of the data selector 20 according to the second embodiment. The data playback unit according to the fourth embodiment is provided with a playback device in addition to the structure. Structures of the playback device is similar to one in the data playback unit according to the third embodiment.

As mentioned above, as the data playback unit according to the fourth embodiment has an structure which derives, based on the multiple third indication information corresponding to each of multiple data units contained in data group and different from each other, the combination of the first and second indication information corresponding thereto, selects one data unit based thereon, and plays it, it can select and play one data unit with only one indication information even if data group has layered structure.

Therefore, even if the controller of the data playback unit has function to select data unit aligned in a row or arranged one-dimensionally only, it will be possible to select and play one data unit from data group with layered structure using said controller. Playback of data group will be realized with extremely simple operation, achieving improved operationality.

Embodiments listed above may be realized in a form integrated with hardware as a dedicated unit, or by loading program into computer.

### Examples

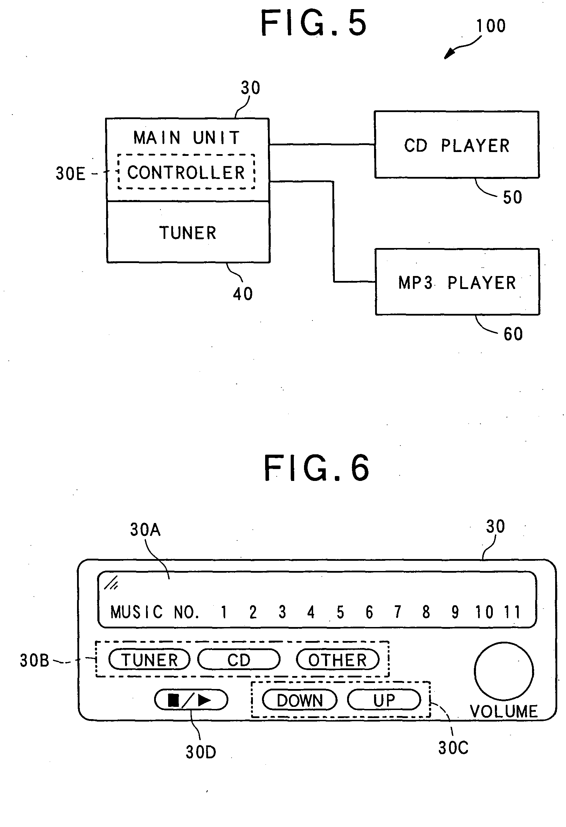

In the following description, an example of this invention will be described referring to FIG. 5 to FIG. 13. The example below is the one wherein data a selector or a data playback unit of this invention is applied to MP3 player in a car audio system.

First, structure of the car audio system in the example is described referring to FIG. 5.

FIG. 5 shows structure of the car audio system in the example. As shown in FIG. 5, a car audio system 100 in the example is provided with: a main unit 30; a tuner 40; a CD player 50; and an MP3 player 60. The tuner 40 is built in the main unit 30. The CD player 50 and MP player 60 have a structure to be connected externally to the main unit 30.

Next, structure of the main unit 30 in the car audio system 100 is described referring to FIG. 6.

The main unit 30 is a unit to operate: band selection at the tuner 40; music data selection and playback at CD player 50; and music file selection and playback at MP3 player 60.

FIG. 6 shows the front panel of the main unit 30. As shown in FIG. 6, on the front panel of the main unit 30 are set up a display 30A to display information necessary to operate the tuner 40, CD player 50 and MP3 player 60, a switch button unit 30B to select the object of operation among the tuner 40, CD player 50 and MP3 player 50, a selection button unit 30C to select band at the tuner 40, music data at the CD player 50, and music file at the MP3 player 60, a replay/start button 30D to operate playback start/stop of music data or file, and the like.

When operating the tuner 40 by means of the main unit 30, first "TUNER" button in the switch button unit 30B is pressed, then "UP" and "DOWN" buttons in the selection button unit 30C are pressed, by which a band can be selected. When operating the CD player 50 by means of the main unit 30, "CD" button in switch button unit 30B is pressed, then "UP" and "DOWN" buttons in the selection button unit 30C are pressed, by which a music data recorded on a disc loaded into the CD player 50 can be selected. By pressing the playback start/stop button 30D, playback of music data recorded on the disc can be started/stopped. Also, when operating the MP player 60 by means of the main unit 30, "OTHER" button in the switch button unit 30B is pressed, then "UP" and "DOWN" buttons in the selection button unit 30C are pressed, by which a music file recorded on a disc loaded into the MP player 60 can be selected. By pressing the playback start/stop button 30D, playback of music files recorded on the disc can be started/stopped.

Inside of the main unit 30 is mounted a controller 30E. The controller 30E outputs, when user operates the switch button unit 30B, select button unit 30C or the like, indication direction corresponding to the user's operation either to the tuner 40, CD player 50 or MP3 player 60.

The main unit 30 is designed so that the car audio system consisting of mounted tuner 40 and external CD player 50 is as a standard. Although the main unit 30 is provided with expanded function which adds any component other than mounted tuner 40 and CD player 50. To car audio system 100 in the example is added the MP3 player 60 utilizing expanded function of the main unit 30. To operate the MP3 player 60 via the main unit 30, therefore, "OTHER" button is pressed.

The object to be played by the MP3 player 60 is music files recorded on disc. As music files are recorded on a disc with layered structure, two selection button units should be usually needed consisting of a selection button unit to indicate folder and the same to select music file in the folder in order to select one music file. However, the main unit 30 is designed so that car audio system mainly consisting of mounted tuner 40 and external CD player 50 is as a standard and there is only equipped with one type of selection button unit 30C necessary for band selection at the tuner 40 and music data selection at CD player, because both individual band at the tuner 40 and individual music data at the CD player 50 are aligned in a row or arranged one-dimensionally and one type of selection button unit is enough to select one band or one music data.

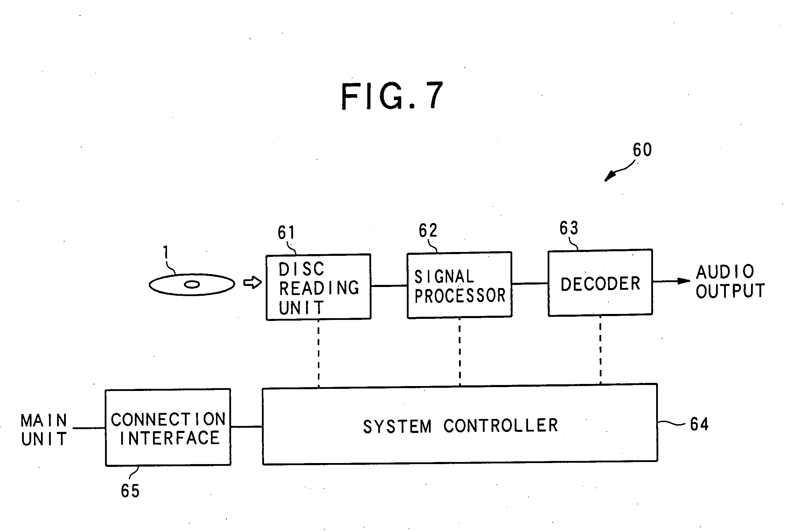

Next, structure of the MP3 player 60 according to the example is described referring to FIG. 7.

FIG. 7 shows structure of the MP3 player 60 according to the example. As shown in FIG. 7, the MP3 player 60 is a data playback unit to music file in MP3 format recorded on a disc 1 such as CD-R, CD-RW, DVD-R, DVD-RW or the like.

The MP3 player 60 is provided with: a disc reader 61; a signal processor 62; a decoder 63; a system controller 64; and a connection interface 65.

The disc reader 61 is provided with: an optical pick-up which irradiates optical beam on the recorded surface of the disc 1 and receives its reflected light; a spindle motor to rotate the disc 1; and a servo-control mechanism to control irradiation site of optical beam, rotation of the spindle motor and the like. The disc reader 61 reads signals corresponding to music files recorded on the disc 1 and outputs the signal read to the signal processor 62.

The signal processor 62 is provided with a demodulation circuit and the like. The signal processor 62 demodulates signals output from the disc reader 61 and extracts audio information and the like. Then, the audio information is supplied to the decoder 63.

The decoder 63 is a circuit to decode audio information. Audio signal decoded by the decoder 63 is supplied to in-car speakers or the like via for example a digital-analog converter.

The system controller 64 is provided with an operational circuit such as CPU (Central Processing Unit), ROM (Read-Only Memory), RAM (Random Access Memory) and a storage circuit. The system controller 64 runs overall control of the MP3 player 60, playback preparation processing, serial number generation processing, playback processing, folder/file number determination processing and the like.

The connection interface 65 is an interface to connect the system controller 64 of the MP3 player 60 and the main unit 30, realizing interactive communication between them.

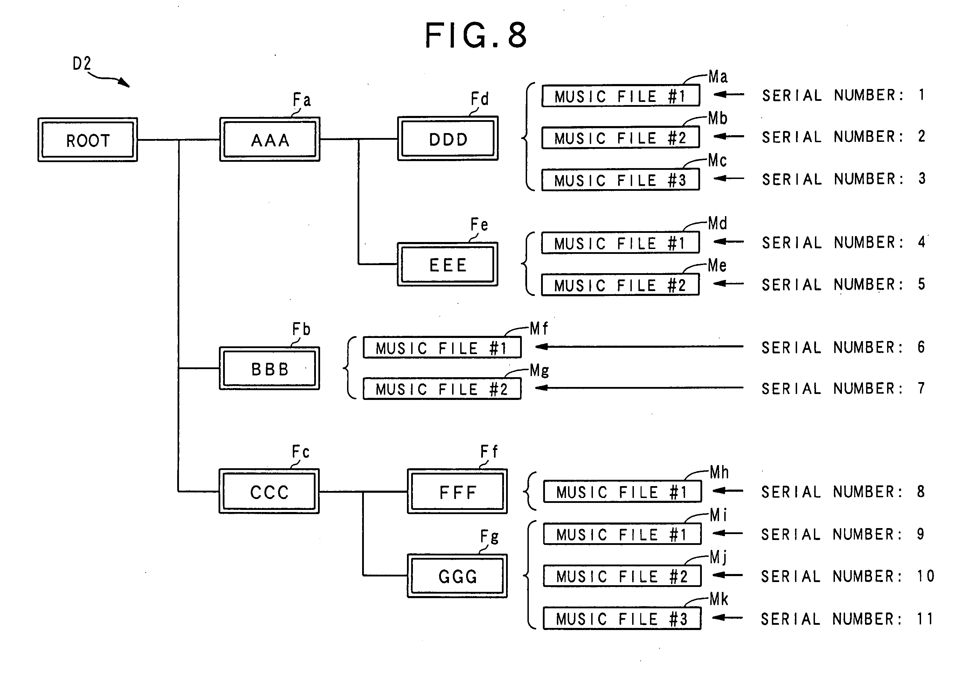

Next, structure of music files in MP3 format is described referring FIG. 8.

FIG. 8 shows structure of music file group recorded on the disc 1 to be played at the MP3 player. As shown in FIG. 8, music file group D2 contains multiple music files Ma to Mk. Music files Ma to Mk are music information compressed and coded in MP3 format, one music file corresponding to one tune of music.

In music file group D2, music files Ma to Mk is managed by layered structure consisting of multiple folders Fa to Fg. Particularly, music files Ma to Mc belong to folder Fd, music files Md and Me belong to folder Fe, music files Mf and Mg belong to folder Fb, music file Mh belongs to folder Ff, and music files Mi to Mk belong to folder Fg. Furthermore, folders Fd and Fe belong to higher folder Fa and folders Ff and Fg belong to higher folder Fc.

To each folder Fa to Fg are assigned each folder name ("AAA," "BBB," ....."GGG") different from each other. Also music files belonging to each folder Fa through Fg have each file number (#1, #2, ....) different from each other within each folder. One music file can be specified by a combination of a folder name and a file number.

As above, music data group D2 has layered structure and therefore two types of operation devices, one to select a folder and the other to select a music file in the folder, should be needed to select one music file from music files Ma to Mk. However, as described above, the selection device to select music file in the main unit 30 is only selection button unit 30C. Therefore, by playback preparation processing, serial number generation processing, playback processing, and folder/file number determination processing described below, MP3 player 60 according to the example realizes selection of one music file with only selection button unit 30C of the main unit 30.

In the following, playback preparation processing, serial number generation processing, playback processing and folder/file number determination processing are described by exemplifying the case wherein music file group D2 recorded on the disc 1 is played by the MP player 60.

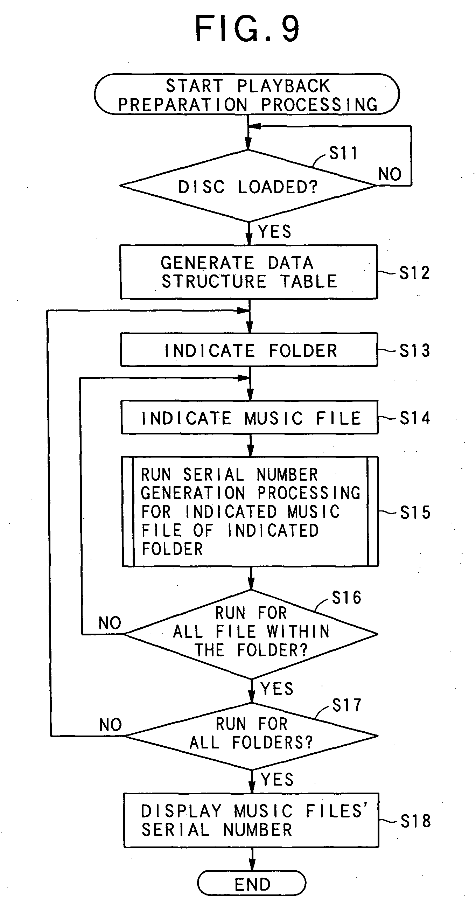

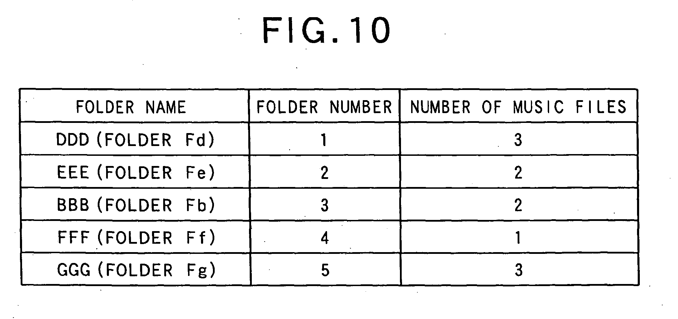

First, playback preparation processing is described referring to FIG. 9 and FIG. 10.

When user loads the disc 1 into the MP3 player 60, playback preparation processing is executed.

FIG. 9 shows playback preparation processing. As shown in FIG. 9, when the disc 1 is loaded into the MP3 player 60 (step S11: YES), the system controller 64 first generates data structure table about music folder group D2 recorded on the disc 1 (step S12).

FIG. 10 shows an example of data structure table about music file group D2.

At step S12, the system controller 64 first selects, among folders Fa to Fg, folders in which music files Ma to Mk have been written directly and numbers these folders serially. As shown in FIG. 8, folders in which music files are written directly are folders Fd, Fe, Fb, Ff, and Fg. The system controller 64 therefore assigns folder numbers "1" to "5" to folders Fd, Fe, Fb, Ff, and Fg and describes these folder numbers to data structure table (See column 2 in FIG. 10). Although the order to number folders is not restricted, for convenience of description, numbers are to be assigned serially from folder Fd arranged uppermost to folder Fg arranged lowermost in the example.

At step S12, the system controller 64 next counts the number of music files belonging to each of individual folder Fd, Fe, Fb, Ff, and Fg selected. As shown in FIG. 8, folder Fd contains three music files, folder Fe contains two, folder Fb contains two, folder Ff contains one, and folder Fg contains three music files, respectively. The system controller 64 counts the number of these music files and describes each number data structure table for every folder (See column 3 in FIG. 10).

Then, the system controller 64 runs processing of step S13 to S 17 and assigns serial numbers to music files Ma to Mk recorded on the disc 1.

First, the system controller 64 specifies one unprocessed folder among folders Fd, Fe, Fb, Ff, and Fg (step S 13). The order of specifying folder follows that of folder numbers described in data structure table (See FIG. 10). Thus, system controller specifies folder Fd first.

Then, the system controller 64 specifies one music file belonging to folder Fd (step S14). Although the order to specify music file is not restricted, in this example music file is to be specified in ascending order, from smaller file number to bigger one. Thus, the system controller 64 specifies music file Ma within folder Fd first.

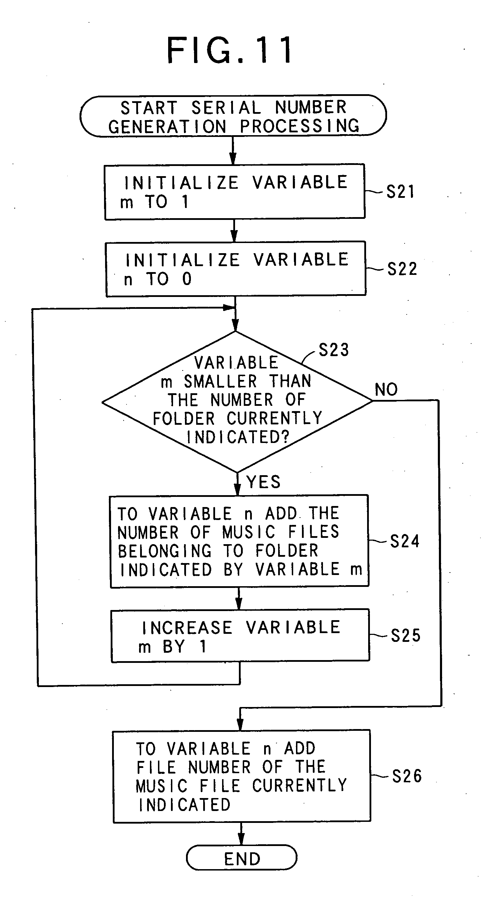

Next, the system controller 64 performs serial number generation processing for the specified music file Ma within the specified folder Fd (step S15). Serial number generation processing is a process to assign serial numbers to each of multiple music files Ma to Mk contained in music file group D2 (See Figure 11). By running serial number generation processing to music file Ma, to music file Ma is assigned serial number "1." Details of serial number generation processing will be described hereinafter.

Then, the system controller 64 judges whether serial number generation processing has been run for all the music files within folder Fd currently being specified (step S16).

At this step, serial number generation processing has been run only for music file Ma among music files Ma to Mc belonging to folder Fd (step S16: "NO"). The system controller 64 therefore returns processing to step S14 to specify the next music file Mb within folder Fd and run processing of steps S15 and S16.

By repeating these steps S14 to S16, serial number generation processing is executed sequentially for music files Mb and Mc belonging to folder Fd. As a result, to music file Mb serial number "2" is assigned and to Mc serial number "3" is assigned.

Then, when serial number generation processing has been finished for all the music files Ma to Mc within folder Fd currently being specified (step S16: YES), the system controller 64 judges next whether serial number generation processing has been run on music files belonging to all the folders (step S17).

At this step, serial number generation processing has been executed only for music files Ma to Mc belonging to folder Fd (step S17: NO). Thus, the system controller 64 returns processing to step S13 to specify next folder Fe following folder number in the data structure table and run processing of steps S13 to S16.

By repeating these steps S13 to S16, serial number generation processing is executed sequentially for music files Md to Mk belonging to each of folders Fe, Fb, Ff, and Fg. As a result, to music files Md to Mk serial numbers "4" to "11" is assigned as shown on the right hand of FIG. 8.

When finished to run serial number generation processing for all the music files Ma to Mk belonging to folders Fd, Fe, Fb, Ff, Fg (step S17: YES), the system controller 64 outputs serial number information of music files Ma to Mk to the main unit 30. The main unit 30 receives this serial number information and displays these serial numbers on the display 30A as shown in FIG. 6 (step S18).

Next, serial number generation processing is described referring to FIG. 11.

FIG. 11 shows serial number generation processing. Serial number generation processing is executed as a subroutine at step S 15 of playback preparation processing. Serial number generation processing is executed for each music file Ma to Mk sequentially while running the process of steps S13 to S17 in playback preparation process repeatedly.

As shown in FIG. 11, the system controller 64 first initializes variable m to "1" (step S21), then variable n to "0" (step S22).

Next, the system controller 64 judges whether variable m is smaller than the folder number of the folder currently being specified at step S13 of playback preparation processing (See FIG. 10) or not (step S23).

If variable m is smaller than the folder number of the folder currently being specified (step S23: YES), the system controller 64 adds the number of music files belonging to the folder specified by variable m to variable n(step S24). Then, variable m is increased by 1 (step S25) and the process is returned to step 23.

On the other hand, if variable m is greater than the folder number currently being specified (step S23: NO), the system controller 64 adds file number (the file number assigned to the music file in the folder to which the music file belongs, for example, in the case of music file Mg in FIG. 8, #2) of music file currently being specified at step S 14 in preparation playback processing to variable n (step S26).

By running above serial number generation processing on music files Ma to Mk sequentially, to music files Ma to Mk are assigned serial numbers "1" to "11."

Here, as an example of a particular operation of serial number generation processing, one case is described referring to FIG. 10 and FIG. 11 where serial number generation processing is run for music file Mg in folder Fb.

Immediately after variable m is initialized to "1" (step S21) and variable n is initialized to "0" (step S22), variable m is smaller than the folder number of folder Fb, "3" (step S23:YES), to variable n is added the number of music files belonging to the folder specified by variable m, that is, folder Fd with folder number 1, "3" (step S24). This results in variable n of "3." Then, variable m is increased by 1 to make it "2" (step S25). Next, variable m is smaller than the folder number of folder Fb, "3" (step S23), to variable n is added the number of music files belonging to the folder specified by variable m, that is, folder Fe with folder number 2, "2" (step S24). This results in variable n of "5." Then, variable m is increased by 1 to make it "3" (step S25). Next, variable m is equal to the folder number of folder Fb, "3" (step S23: NO), to variable n is added the file number of music file Mg, "2" (step S26). It results in variable n of "7" and this variable n, 7 will be the serial number for music file Mg.

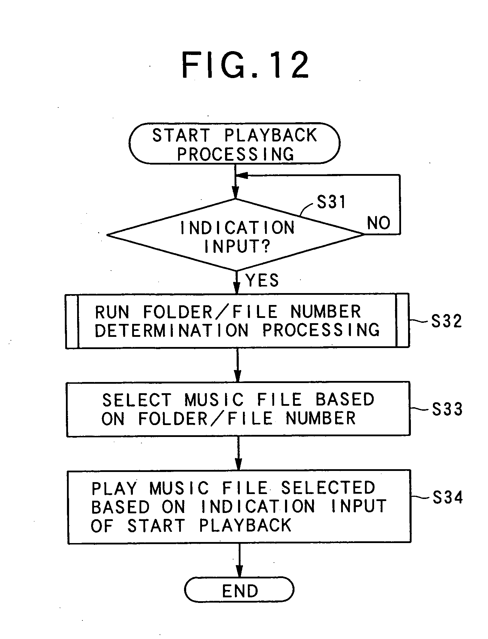

Next, playback processing is described referring to FIG. 12.

Playback processing is executed subsequent to run of playback preparation processing.

FIG. 12 shows playback. processing. After playback preparation processing is finished, on display 30A of the main unit 30 are displayed serial numbers of music files recorded on the disc 1 (See FIG. 6). User operates the selection button unit 30C to select the serial number of the desired music file while looking at the display 30A. By doing this, indication direction indicating serial number selected by user is output from the controller 30E of the main unit 30.

The system controller 64 of the MP3 player 60 receives this indication direction (step S31: YES), and subsequently executes folder/file number determination processing for the serial number indicated by this indication direction (step S32). Folder/file number determination processing is a process to determine a folder number to which the music file belongs and a file number of that music file based on the serial numbers of music files. For example, if the serial number indicated by indication direction is "7," folder number of folder Fb, "3" (see FIG. 10) and file number of music file Mg, "2" (see FIG. 8) are determined by folder/file number determination processing. Details of folder/file determination processing will be described hereinafter.

Then, the system controller 64 selects one music file among music file group D2 recorded on the disc 1 based on folder and file numbers determined (step S33).

When user pushes playback the start/stop button 30D of the main unit 30, system controller then starts to play the one music file selected (step S34).

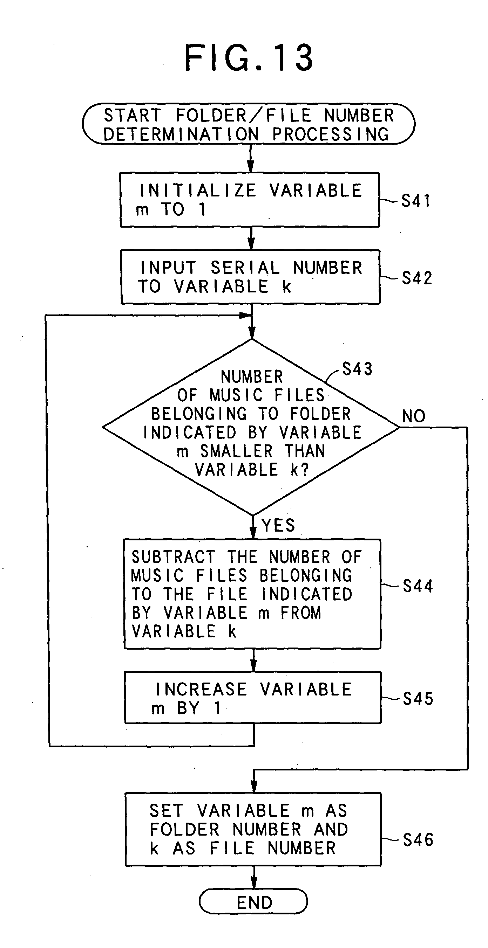

Next, file/folder number determination processing is described referring to FIG. 13.

FIG. 13 shows folder/file number determination processing. Folder/file number determination processing is run as a subroutine at step S32 in the playback processing.

As shown in FIG. 13, the system controller 64 first initializes variable m to 1 (step S41), then, inputs serial number indicated by indication direction received at step S31 of playback processing.

Next, the system controller 64 judges whether the number of music files belonging to the folder indicated by variable m is smaller than variable k or not (step S43).

If the number of music files belonging to the folder indicated by variable m is smaller than variable k (step S43: YES), the system controller 64 subtracts the number of music files belonging to the music folder indicated by variable m from variable k (step S44). Subsequently, variable m is increased by 1 (step S45) and process is returned to step S43.

On the other hand, when the number of music files belonging to the folder indicated by variable m is greater than variable k (step S43: NO), the system controller 64 sets current variable m as folder number and current variable k as file number (step S46).

Here, as an example of particular operation of folder/file number determination processing, a case is described referring to FIG. 10 and FIG. 13 where serial number indicated by indication direction received by step S31 at playback processing is "7."

Immediately after variable m is initialized to "1" (step S41) and serial number "7" is input to variable k (step S42), the number of music files belonging to folder indicated by variable m, that is, folder Fd with folder number 1, "3," is smaller than variable k (step S43: YES). Therefore the number of music files belonging to folder Fd, "3," is subtracted from variable k (step S44). This results in variable k of "4." Subsequently variable m is increased by 1 to "2" (step S45). Then, the number of music files belonging to folder indicated by variable m, that is, folder Fe with folder number 2, "2," is smaller than variable k (step S43: YES). Therefore the number of music files belonging to folder Fe, "2" is subtracted from variable k (step S44). This results in variable k of "2." Next, variable m is increased by 1 to "3" (step S45). Then, the number of music files belonging to the folder indicated by variable m, that is, folder Fb with folder number 3, "2," is equal to variable k (step S43: NO). Therefore, "3" which is current variable m is set as folder number and "2," current variable k, as file number (step S46).

As above, as the MP3 player 60 according to this example has a structure in which serial numbers are assigned to music files Ma to Mk based on folder and file numbers to specify one music file among music file group D2 with layered structure, it will be possible to select one music file with one selection button unit based on serial number. Also, as the MP3 player 60 according to this example has a structure in which folder and file numbers corresponding to serial number based on the serial number indicated by indication direction output from the main unit 30, it will be possible to select one music file with one selection button unit 30C.

As described above, therefore, the main unit 30 only has one selection button unit 30C to select options aligned in a row or arranged one-dimensionally, although it will be possible to select one music file among music file group D2 with layered structure using only this one selection button unit 30C.

This will realize operation of the MP player 60 by employing the main unit 30 without modification and it will also be possible to play music files in MP3 format in a car only by adding the MP3 player 60 to a car audio system consisting of the main unit 30, tuner 40 and CD player 50.

As a result, manufacturers can realize reduction of product development cost and period because they do not need to newly develop and produce the main unit 30. For users, on the other hand, it will eliminate the necessity to replace the main unit 30 with newer one, leading to economical efficiency and convenience.

As the MP3 player 60 according to this example has a structure which assigns serial numbers to music files Ma to Mk, it will be possible to select one music file easily and rapidly based on said serial numbers.

Furthermore, as the MP3 player 60 according to this example has a structure which generates data structure table (see FIG. 10) which is utilized when assigning serial numbers to music files Ma to Mk and determining folder/file numbers from serial numbers, it will be possible to run processing to assign serial numbers to music files Ma to Mk and determine folder/file numbers from serial numbers easily and rapidly.

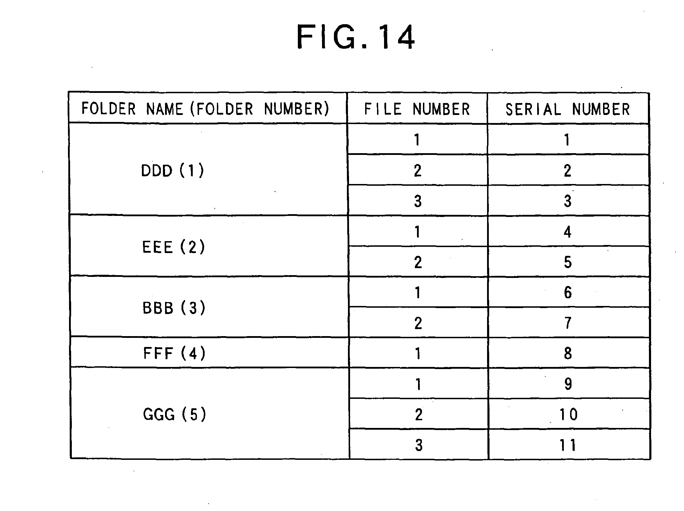

Although the structure in the above described example has such a structure that calculates folder and file numbers by operation upon indication direction indicating serial number from main unit, the invention is not limited to the same. For example, the structure may be such that in which conversion table is generated which correlates each serial number generated at playback preparation processing and folder and file numbers corresponding to each music file and then stores it in storage means within the system controller 64 such as RAM. For example, FIG. 14 shows an example of conversion table for music file group D2 in FIG. 8. When indication direction indicating serial numbers is input from the main unit 30, by using such a conversion table it will be possible to determine folder and file numbers from serial numbers easily.

Also, the invention can be modified correspondingly as long as such modifications are in the scope of the abstract or spirit of the invention which will be read from the appended claims and the whole specification. Data selectors, data selection method and data playback unit with such modifications, and computer programs to realize these functions will also be included in the spirit of this invention.

## Claims

1. A data selector (10) for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group,
**characterized in that** the data selector (10) comprises:
a generation device (11), based on said first and second indication information, which generates multiple third indication information corresponding to each of the multiple data units contained in the data group and different from each other;
a receiving device (12) which receives one piece of the third indication information input externally; and
a selection device (13) which selects one data unit corresponding to the one piece of the third indication information received by the receiving device.

2. The data selector (10) according to claim 1, wherein the generation device assigns numbers different from each other to each of the multiple data units contained in the data group.

3. The data selector (10) according to claim 1 or 2, wherein the generation device generates data structure table in which the numbers of data units arranged directly within each group has been written for every group and then generates, using this data generation table, the third indication information.

4. A data selector (20) for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group,
**characterized in that** the data selector (20) comprises:
a receiving device (21) which receives multiple third indication information corresponding to each of the multiple data units contained in the data group and different from each other when it is input externally;
a determination device (22) which determines the first and second indication information indicating one data unit corresponding to one piece of the third indication information based on the one piece of the third indication information received by the receiving device; and
a selection device (23) which selects the one data unit based on the first and second indication information determined by the determination device.

5. The data selector (20) according to claim 4, wherein the third indication information is assigned to each of the multiple data units contained in the data group and different from each other.

6. The data selector (20) according to claim 4 or 5, wherein the determination device generates data structure table in which the numbers of data units arranged directly within each group has been written for every group and, using this data structure table, determines the first and second indication information indicating one data unit corresponding to the one piece of the third indication information.

7. The data selector (10, 20) according to any one of claims 1 to 6, wherein the data selector further comprises a selection indication input device,
wherein the selection indication input device comprises:
an operation device which performs input operation; and
an output device which outputs the third indication information corresponding to the one data unit to the receiving device when input operation is performed to select one data unit among the multiple data units using the operation device.

8. A computer program embodied on a recording medium which can be read by a computer in a data selector for selecting one data unit from data group which contains multiple data units, the multiple data units being managed by use of layered structure consisting of multiple groups and in which one data unit is specified by use of the first indication information indicating at least individual group and the second indication information indicating individual data unit contained in each group,
**characterized in that** the computer program causes the computer (64) to function as:
a generation device, based on said first and second indication information, which generates multiple third indication information corresponding to each of the multiple data units contained in the data group and different from each other;
a receiving device which receives one piece of the third indication information input externally; and
a selection device which selects one data unit corresponding to the one piece of the third indication information received by the receiving device.

9. A data selection method for selecting one data unit from data group which contains multiple data units, the data units being managed by use of layered structure consisting of multiple groups, and in which one data unit is specified by use of the first indication information indicating at least individual group and the second indication information indicating individual data unit contained in each group,
the method comprising:
a generation process for generating, based on said first and second indication information, multiple third indication information corresponding to each of the multiple data units and different from each other;
a receiving process for receiving one piece of the third indication information input externally; and
a selection process for selecting one data unit corresponding to the one piece of the third indication information received at the receiving process.

10. A data selection method for selecting one data unit from data group which contains multiple data units, the data units being managed by use of layered structure consisting of multiple groups, and in which one data unit is specified by use of the first indication information indicating at least individual group and the second indication information indicating individual data unit contained in each group,
the method comprising:
a receiving process for receiving multiple third indication information corresponding to each of the multiple data units contained in the data group and different from each other when it is input externally;
a determination process for determining, based on the one piece of the third indication information received at the receiving process, the first and second indication information indicating one data unit corresponding to the one piece of the third indication information; and
a selection process for selecting the one data unit based on the first and second indication information determined at the determination process.

11. A data playback unit (60) for selecting and playing one data unit from data group which contains multiple data units, the data units being managed by use of layered structure consisting of multiple groups, and in which one data unit is specified by use of the first indication information indicating at least individual group and the second indication information indicating individual data unit contained in each group,
**characterized in that** the data playback unit (60) comprising:
a generation device (64) which generates, based on the first and second indication information, multiple third indication information corresponding to each of the multiple data units and different from each other;
a receiving device (64) which receives one piece of the third indication information input externally;
a selection device (64) which selects one data unit corresponding to the one piece of the third indication information received by the receiving device; and
a playback device (64) which plays one data unit selected by the selection device.

12. A data playback unit (60) for selecting and playing one data unit from data group which contains multiple data units, the multiple data units being managed by use of layered structure consisting of multiple groups, and in which one data unit is specified by use of the first indication information indicating at least individual group and the second indication information indicating individual data unit contained in each group,
**characterized in that** the data playback unit (60) comprising:
a receiving device (64) which receives multiple third indication information corresponding to each of the multiple data units contained in the data group and different from each other when it is input externally;
a determination device (64) which determines, based on one piece of the third indication information received by the receiving device, the first and second indication information indicating one data unit corresponding to the one piece of the third indication information;
a selection device (64) which selects the one data unit based on the first and second indication information determined by the determination device; and
a playback device (64) which plays one data unit selected by the selection device.
